(19) Europäisches Patentamt
European Patent Office
Office européen des brevets

(11) **EP 3 364 616 A1**

(12) **EUROPEAN PATENT APPLICATION**

(43) Date of publication:
**22.08.2018 Bulletin 2018/34**

(51) Int Cl.:
**H04L 12/867** (2013.01)     *H04L 12/911* (2013.01)
**H04W 28/02** (2009.01)     *H04W 88/16* (2009.01)

(21) Application number: **17156959.3**

(22) Date of filing: **20.02.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Nokia Solutions and Networks Oy
02610 Espoo (FI)**

(72) Inventors:
• **GACANIN, Haris
2018 Antwerp (BE)**
• **ROSTAMI, Soheil
2018 Antwerp (BE)**

(74) Representative: **D'Halleweyn, Nele Veerle Trees
Gertrudis et al
Arnold & Siedsma
Bezuidenhoutseweg 57
2594 AC The Hague (NL)**

(54) **RESOURCE ALLOCATION DEVICE AND METHOD TO MULTIPLE ACCESS NETWORKS ACCORDING TO A NETWORK CONDITION OF EACH**

(57)     Resource allocation device for allocating resources of a transport medium shared by multiple access networks, comprising: an estimating unit to estimate for each access network an internal network condition, said internal network condition being representative for internal resources which are available within the respective access network, such as a traffic latency; a traffic weight calculating unit to calculate for each access network a traffic weight based on the respective estimated internal network condition, a higher traffic weight being representative for more internal resources being available and a lower traffic weight being representative for less internal resources being available; a resource allocation unit to allocate resources of the transport medium to each access network, based on the calculated traffic weight of the respective access network, more resources being allocated to an access network with a higher traffic weight and less resources being allocated to an access network with a lower traffic weight. The resource allocation may be carried out by means of weighted fair queuing algorithm, and considerations of the traffic class or QoS of the traffic are a secondary criterion after taking into account the network condition of the access network from where the traffic is received.

FIG. 1

**Description**

Field of Invention

The field of the invention relates to a resource allocation device and a resource allocation method. Particular embodiments relate to the field of resource allocation devices and methods for allocating resources of a shared transport medium to multiple access networks within a multi-access network.

Background

With ever-increasing demand for internet connectivity, multi access networks (multi-ANs) such as home area networks (HANs) are becoming dense and complex. Heterogeneous network deployments, wireless and/or wired, of multi-ANs provide better connectivity and support diverse services through different internet-connected devices by supporting different access technologies such as local area network (LAN), wireless LAN (WLAN), power line communication (PLC), etc. An example of a multi-access network (multi-AN) is a heterogeneous HAN. In a typical home network set-up a residential gateway connects all users belonging to different ANs within the HAN to the internet through a shared transport medium providing broadband access, for example via digital subscriber line (xDSL), optical fiber (FTTX) or satellite.

Nowadays, internet subscribers more than ever experience congestion during the internet rush hours, due to growing number of bandwidth-hungry applications, emerging over the top (OTT) contents and limited capacity of either the particular AN or the broadband access. This network congestion is leading to a reduced quality of experience (QoE) with video calls, voice over internet protocol (VoIP) communications, and web browsing. From the perspective of an internet service providers (ISP) perspective, congestions in HANs form the bottleneck for delivering data packets in a timely fashion.

Summary

Technological and architectural differences of ANs, especially in case of wireless and wired systems, result in inter-AN fairness problems that are not particularly handled well by existing mechanisms which are often designed for homogeneous environments, more in particular in case of transport congestion. A good user experience over these different systems requires homogeneous QoE architectures and fair resource sharing mechanisms.

The object of embodiments of the invention is to provide a resource allocation device and method, which allow users from different ANs within a multi-AN to have a fair user experience regardless of the actual AN used and thus regardless of their point of attachment within the multi-AN, such that multiple users can enjoy their applications with acceptable quality.

According to a first aspect of the invention there is provided a resource allocation device for allocating resources of a shared transport medium to multiple access networks within a multi-access network, said resource allocation device comprising:

- an estimating unit configured to estimate for each access network of the multiple access networks an internal network condition, said internal network condition being representative for internal resources which are available within the respective access network;
- a traffic weight calculating unit configured to calculate for each access network of the multiple access networks a traffic weight based on the respective estimated internal network condition, wherein a higher traffic weight is representative for more internal resources being available and a lower traffic weight is representative for less internal resources being available;
- a resource allocation unit configured to allocate resources of the shared transport medium to each access network of the multiple access networks, based on the calculated traffic weight of the respective access network, wherein more resources are allocated to an access network with a higher traffic weight and less resources are allocated to an access network with a lower traffic weight.

Embodiments of the invention are based *inter alia* on the insight that estimating the internal network condition of an AN within the multi-AN and thereby probing available resources within the respective AN allows for a more educated manner of allocating resources in respect with prior art devices and methods which only consider a desired quality of service (QoS) based on the type of data or traffic class. Based on the estimated network condition, a separate traffic weight is calculated for and assigned to traffic originating from a particular AN. In other words, traffic originating from different ANs gets assigned different traffic weights which depend on the available resources in the corresponding ANs. When sufficient internal resources are available within an AN, a higher traffic weight will be assigned. On the contrary, when only limited internal resources are available within an AN, a lower traffic weight will be assigned. The resource allocation unit takes into account these traffic weights and allocates more resources of the shared transport medium to traffic with a higher traffic weight. This way, bottlenecks occurring within the multi-AN can be reduced. For example, when a first AN (AN1) within the multi-AN is experiencing high internal latency, and thus has limited available internal resources, a low traffic weight will be calculated and assigned to traffic corresponding to that particular AN1. This has the effect that traffic from other ANs in the multi-AN will be prioritized over the traffic corresponding to the high latency AN1, and will get allocated more resources from the shared transport medium, e.g. broadband access, while the traffic corresponding to AN1 will be allocated only a limited amount of resources, corresponding to the internal network condition or capacity of AN1, thereby reducing the chance of a bottleneck arising. Since AN1 is experiencing high internal latency, allocating fewer resources of the broadband access to AN1 will not negatively influence the user experience for a user in AN1, even if that particular user might be requiring high quality video streaming. In prior art solutions such as known residential gateways, this high quality video streaming traffic would be allocated more resources of the broadband access, simply because of the type of traffic. However, this will lead to a bottleneck in the multi-AN, since AN1 is experiencing high latency and cannot, at the moment, process that amount of traffic. Moreover, in the same prior art solution user experience of users in other ANs within the AN might degrade, because they require only voice over internet protocol or best effort data, and the high quality video traffic is using up the resources of the shared transport medium to no result. The resource allocating device as described above addresses these problems by taking into account the internal network condition of each AN within the multi-AN and allocating resources of the shared transport medium, e.g. broadband access link to the internet, based on the internal network conditions.

In other words, users of the different ANs are treated fairly and can have a similar quality of experience regardless of their point of attachment to the multi-AN, and are enabled to use their applications with acceptable quality. This homogeneous QoE of users in within the multi-AN, e.g. HAN, regardless of their associated AN, is achieved by providing the resource allocation device according to the invention which provides an AN-aware traffic mechanism are required at the residential gateway. The described resource allocation device increases inter-AN fairness and achieves a reduced amount of packet delays, especially in the case of a congested AN, taking into account the momentarily usage of internal resources when allocating resources of the shared transport medium.

Prior art residential gateways, which provide an interface between a HAN and the internet are not aware of the internal network conditions of the ANs within the HAN.

Embodiments of the resource allocation device according to the invention may improve and unify QoE in the HAN, and will as well increase the global satisfaction of the end-user with respect to the quality of service.

According to an embodiment the estimating unit is configured to receive from each access network of the multiple access networks an internal network parameter, said internal network parameter being representative for the internal network condition of the respective access network; and to estimate the internal network condition based on said received internal network parameter.

For each AN within the multi-AN, the corresponding internal network parameter facilitates estimating the internal network condition. The internal network parameter is provided by each of the ANs in the multi-AN. The ANs may provide the internal network parameter on request of the resource allocating device or the ANs may provide the internal network parameter at predefined moments in time, or each time an internal network condition changes. This allows the resource allocation device to adaptively and dynamically allocate resources of the shared transport medium.

According to an embodiment the resource allocation device receives traffic from each access network of the multiple access networks and wherein the resource allocation device comprises a first traffic classification unit configured to classify the received traffic according to access network, based on an internal transport medium used by the respective access network.

This way, the resource allocation device can distinguish between traffic corresponding to different ANs within the multi-AN if required. Given the nature of multi-ANs such as heterogeneous HANs, traffic can be distinguished based on the internal transport medium used by the respective access network, such as LAN, WLAN, PLC, etc.

According to an embodiment the first traffic classification unit is configured to classify the received traffic according to access network, based on a media access control, MAC, address from which the received traffic originates.

This allows for a fast and efficient way for the resource allocating device to classify incoming traffic. Amongst other pieces of information, the origin of the traffic can be deducted from the corresponding MAC address. In an exemplary embodiment a look-up table can be used, which lists the MAC-addresses of users within the multi-AN, the corresponding access network within the multi-AN, and corresponding internal network condition and/or internal network parameter. In alternative embodiments the first traffic classification unit is configured to classify the received traffic according to access network, based on other parameters such as an application to which the traffic is related, the destination of the traffic, etc.

According to an embodiment the resource allocation unit is configured to allocate resources of the shared transport medium by executing a weighted fair queuing algorithm on the calculated traffic weights of the respective access networks.

By employing the weighted fair queuing algorithm traffic packets can be scheduled allowing guaranteed bandwidth services. This way the distinguished traffic can share the same shared link or shared transport medium. It is clear to the skilled person that alternative queuing algorithms can be applied based on the calculated traffic weights in order to allocate resources of the shared transport medium.
In alternative embodiments the allocation unit is configured to allocate resources of the shared transport medium, based on other parameters such as an application to which the traffic is related, the destination of the traffic, the priority of a certain user, etc.

According to an embodiment the resource allocation device comprises a second traffic classification unit configured to classify received traffic from each access network of the multiple access networks according to a traffic class after the traffic weight calculating unit has calculated a traffic weight for each access network of the multiple access networks. The resource allocation unit is further configured to allocate resources of the shared transport medium to each access network of the multiple access networks, based on the calculated traffic weight of the respective access network and the traffic class of traffic originating from said respective access network.

This way, the resource allocation device additionally takes into account the traffic class or traffic type of the received traffic. Traffic classes correspond with the required QoS associated with the traffic, and comprise for example, in ascending order of required QoS: best effort, VOIP, video and online gaming.

According to an embodiment the resource allocation unit is configured allocate resources of the shared transport medium based on the calculated traffic weight as a primary criterion and based on the traffic class as a secondary criterion.

By using the calculated traffic weight as a primary criterion, i.e. as a first parameter, to allocate resources the resource allocating device takes into account the internal network condition of the respective ANs, leading to a more educated allocation of resources as compared to prior art solution. By using the traffic class as a secondary criterion, i.e. as an additional parameter, to allocate resources the resource allocating device takes into account the required quality of service of the respective traffic, as a surplus to the available internal resources of the AN corresponding to the respective traffic.

The skilled person will understand that the hereinabove described technical considerations and advantages for device embodiments also apply to the below described corresponding method embodiments, *mutatis mutandis.*

According to a second aspect of the invention there is provided a resource allocation method for allocating resources of a shared transport medium to multiple access networks within a multi-access network, said resource allocation method comprising the steps of:

- estimating for each access network of the multiple access networks an internal network condition, said internal network condition being representative for internal resources which are available within the respective access network;
- calculating for each access network of the multiple access networks a traffic weight based on the respective estimated internal network condition, wherein a higher traffic weight is representative for more internal resources being available and a lower traffic weight is representative for less internal resources being available;
- allocating resources of the shared transport medium to each access network of the multiple access networks, based on the calculated traffic weight of the respective access network, wherein more resources are allocated to an access network with a higher traffic weight and less resources are allocated to an access network with a lower traffic weight.

According to an embodiment estimating the internal network condition comprises:

- receiving from each access network of the multiple access networks an internal network parameter, said internal network parameter being representative for the internal network condition of the respective access network; and
- estimating the internal network condition based on said received internal network parameter.

According to an embodiment the resource allocation method comprises receiving traffic from each access network of the multiple access networks; and classifying the received traffic according to access network based on an internal transport medium used by the respective access network.

According to an embodiment classifying the received traffic according to access network is based on a media access control, MAC, address from which the received traffic originates.

According to an embodiment allocating resources of the shared transport medium comprises executing a weighted fair queuing algorithm on the calculated traffic weights of the respective access networks.

According to an embodiment the resource allocation method further comprises:

- classifying received traffic from each access network of the multiple access networks according to a traffic class after calculating the traffic weight for each access network of the multiple access networks; and
- allocating resources of the shared transport medium to each access network of the multiple access networks, based on the calculated traffic weight of the respective access network and the traffic class of traffic originating from said respective access network.

According to an embodiment the resource allocation method comprises allocating resources of the shared transport medium based on the calculated traffic weight as a primary criterion and based on the traffic class as a secondary criterion.

According to a further aspect of the invention, there is provided a computer program comprising computer-executable instructions to perform the method, when the program is run on a computer, according to any one of the steps of any one of the embodiments disclosed above.

According to a further aspect of the invention, there is provided a computer device or other hardware device programmed to perform one or more steps of any one of the embodiments of the method disclosed above.

According to another aspect there is provided a data storage device encoding a program in machine-readable and machine-executable form to perform one or more steps of any one of the embodiments of the method disclosed above.

Brief description of the figures

The accompanying drawings are used to illustrate presently preferred non-limiting exemplary embodiments of devices of the present invention. The above and other advantages of the features and objects of the invention will become more apparent and the invention will be better understood from the following detailed description when read in conjunction with the accompanying drawings, in which:

Figure 1 illustrates schematically an exemplary embodiment of a resource allocation device for allocating resources of a shared transport medium to multiple access networks within a multi-access network according to the invention in an exemplary network architecture;

Figure 2 illustrates schematically an alternative embodiment of a resource allocation device according to the invention;

Figure 3 illustrates schematically a further embodiment of a resource allocation device according to the invention;

Figure 4 is a flowchart illustrating an exemplary embodiment of a resource allocation method for allocating resources of a shared transport medium to multiple access networks within a multi-access network according to the invention;

Figure 5 is a flowchart illustrating an alternative embodiment of a resource allocation method according to the invention; and

Figure 6 is a flowchart illustrating a further embodiment of a resource allocation method according to the invention.

Description of embodiments

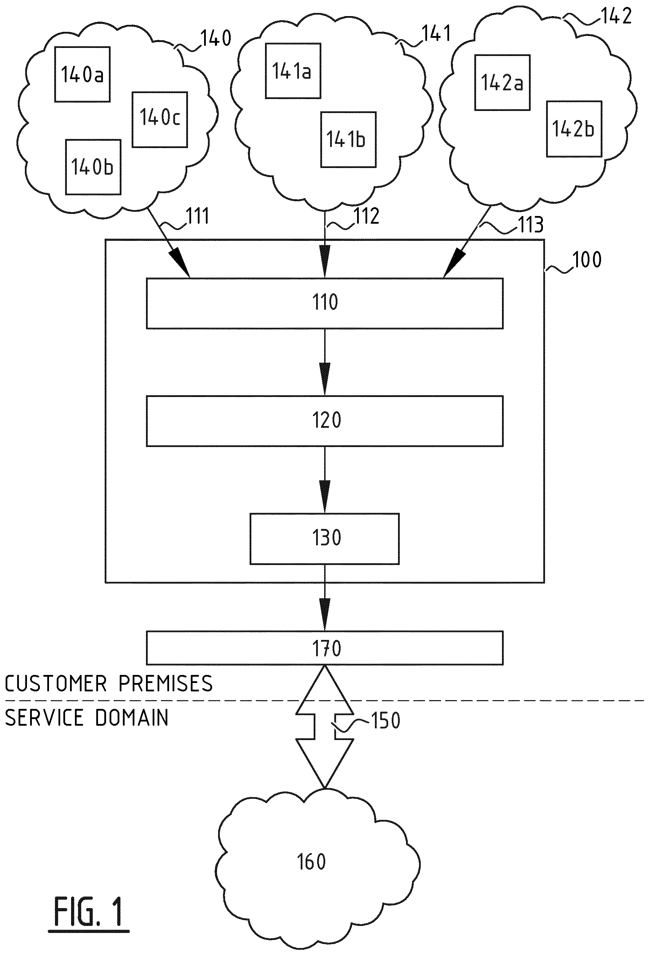

Figure 1 illustrates schematically an exemplary embodiment of a resource allocation device 100 for allocating resources of a shared transport medium 150 to multiple access networks 140, 141, 142 within a multi-access network according to the invention in an exemplary network architecture. The resource allocation device 100 comprises an estimating unit 110 which is configured to estimate for each access network of the multiple access networks 140, 141, 142 an internal network condition which is representative for internal resources which are available within the respective access network at a certain time. In figure 1, three access networks 140, 141, 142 are shown, which access networks together form a multi-access network. In the embodiment of figure 1, the access networks 140, 141 and 142 might form a heterogeneous HAN, in which for example AN 140 is a WLAN serving user devices 140a, 140b and 140c, AN 141 is a PLC serving user devices 141a and 141b, and AN 142 is a LAN serving user devices 142a and 142b. User devices 140a, 140b and 140c might be a tablet computer, a laptop and a smart TV, respectively, user devices 141a and 141b might be a personal computer and a HDTV, respectively, and user devices 142a and 142b might be a personal computer and a gaming console, respectively. The skilled person understands that the resource allocation device can similarly be applied to alternative AN configurations which serve other user devices and that the embodiment illustrated in figure 1 is merely an exemplary embodiment. In the illustrated embodiment, access networks 140, 141 and 142 are directly connected to the resource allocation device via connections 111, 112 and 113, however, in alternative embodiments there may be provided an interface layer (not shown) between the respective access networks 140, 141, 142 and the resource allocation device 100. The nature of the connections 111, 112, 113 depends on the type of corresponding access network and over these connections traffic or data can be sent from/to the access networks 140, 141, 142 to/from the resource allocation device 100. Data that may be sent over the connections 111, 112, 113 in addition to traffic can include feedback reports regarding internal network conditions or several access network parameters such as internal network parameters. The connections 111, 112 and 113 are shown to be connected to the resource allocation device 100 via the estimating unit 110, however, alternatively the connections 111, 112, 113 may be connected to the resource allocation device 100 in any other way, for example via a dedicated interface unit.

The resource allocation device 100 further comprises a traffic weight calculating unit 120 which is configured to calculate for each access network of the multiple access networks 140, 141 and 142 a traffic weight based on the estimated internal network condition for the respective access network 140, 141 or 142 and assign the calculated traffic weight to the corresponding traffic, associated with the respective access network 140, 141 or 142. When the WLAN 140 is experiencing a higher latency as compared to the LAN 142 which is not experiencing any latency, a higher traffic weight will be calculated for, and assigned to traffic corresponding to the LAN 142. This way, the traffic weight is representative for the amount of internal resources which are readily available at that particular moment in time in the respective access network. If at a later moment in time, more internal resources become available in the WLAN 140, latency experienced by the WLAN 140 will be reduces or diminished and new traffic weights can be calculated and assigned. This way, the resource allocation device 100 is capable of adaptively managing resources according to the dynamics of the ANs 140, 141, 142 within the HAN.

The resource allocation device 100 further comprises a resource allocation unit 130 which is configured to allocate resources of the shared transport medium 150 to each access network of the multiple access networks 140, 141, 142, based on the calculated traffic weight of the respective access network. When an AN is experiencing very low or no latency, the respective calculated and assigned traffic weight will be relatively high, which will result in a relatively big amount of resources of the shared transport medium 150 being allocated to said particular AN.

In the architecture according to figure 1, at the customer premises, the resource allocation device 100 is connected to a residential gateway 170 via the resource allocation unit 130. In such an embodiment, the resource allocation unit 130 will not directly allocate resources of the broadband access link 150, but will allocate resources of a shared medium (not shown) used to transport the HAN traffic to the residential gateway 170. The residential gateway 170 may for example comprise a further traffic classifier and a packet scheduler to further process the HAN traffic and further allocate resources of the broadband access link 150 based on traffic class or type to keep into account the required quality of service. This way, resources are allocated to the HAN traffic based on type of access technology, type of AN, before reaching the residential gateway 170, and consequently at the residential gateway 170 resources are allocated based on the type or class of traffic.

Embodiments of the resource allocation device 100 may alternatively be applied in an architecture without a separate residential gateway 170. In such embodiments, the resource allocation device 100 may either be directly connected to the shared transport medium, e.g. broadband access link, or the resource allocation device may be incorporated or integrated in an existing residential gateway 170.

The shared transport medium 150 provides a link, e.g. 100 Mbps broadband access link, between on the one hand the customer premises, comprising the HAN 140, 141, 142, the resource allocation device 100 and optionally the residential gateway 170, and on the other hand the service domain 160 comprising for example the internet. The internet or cloud service domain 160 may provide over the top (OTT) services, video streaming services, home office services or online gaming services amongst others.

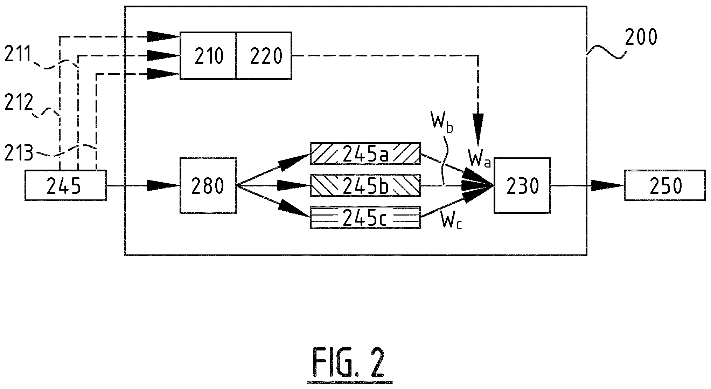

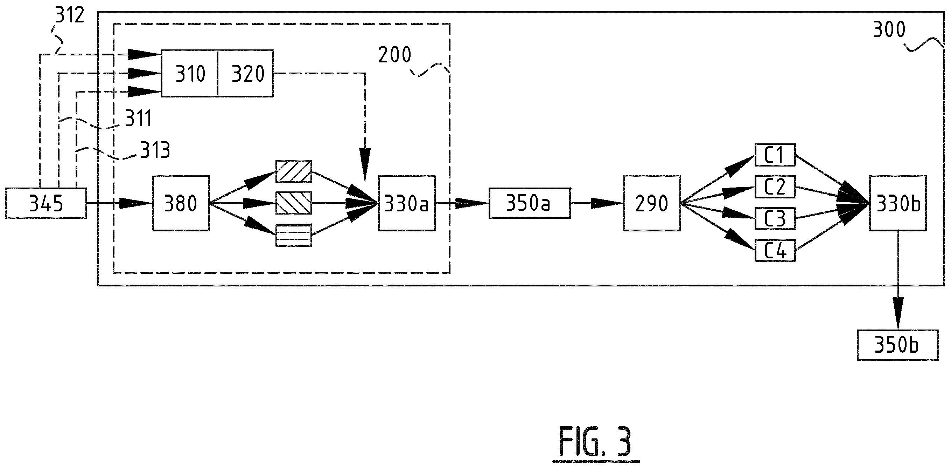

Figure 2 illustrates schematically an alternative embodiment of a resource allocation device 200 according to the invention, to further illustrate the functionality thereof. In the exemplary embodiment of figure 2, it is assumed that users of different ANs within the HAN, in this case users of a WLAN 140, PLC 141 and LAN 142 (not shown in figure 2) may want to access application content at a media server located in the internet service domain 160 (not shown in figure 2). Element 250 represents a shared transport medium connecting the resource allocation device 200 with the internet service domain 160. The described resource allocation device 200 can be implemented either at the residential gateway 170 or standalone, see figure 3. Based on priorities, i.e. determined by internal network parameters and/or traffic weights, set adaptively by the resource allocation device 200, traffic flows from different network accesses (WLAN 140, PLC 141, LAN 142) will be treated in a different manner.

In addition to the units described in function of the embodiment of figure 1, the resource allocation device 200 in figure 2 comprises a first traffic classification unit 280 configured to classify the received traffic 245 according to access network technology, i.e. based on the physical medium of transport used in the respective access network. Element 245 represents incoming traffic from the HAN, which comprises traffic originating from the different access networks within the HAN, e.g. from a WLAN, PLC and LAN. The incoming traffic is received by the resource allocation device 200, more in particular in the illustrated embodiment by the first traffic classification unit 280. In addition to traffic 245, data 211, 212 and 213 pertaining to the WLAN 140, PLC 141 and LAN 142 (not shown in figure 2), respectively, is provided to the resource allocation device 200, more in particular to the estimating unit 210. These data may be internal network parameters 211, 212, 213, being representative for the internal network condition of the respective access networks 140, 141, 142.

The first traffic classification unit 280 may be configured to classify the received traffic 245 according to access network, based on a MAC address from which the received traffic 245 originates. In other words, in first traffic classification unit 280 flows are classified based on their MAC address, and thereby categorized per AN. In figure 2, the incoming traffic 245 is categorized in traffic 245a corresponding to the WLAN 140, traffic 245b corresponding to the PLC 141 and traffic 245c corresponding to the LAN 142. In the meantime, each of the ANs 140, 141 and 142 has provided a corresponding internal network parameter 211, 212, and 213, respectively, to the estimating unit 210. Based on these parameters 211, 212 and 213, which are representative for the internal network condition of each of the ANs, the traffic weight calculating unit 220 calculates for each access network of the multiple access networks 140, 141, 142 a traffic weight $W_a$, $W_b$, $W_c$, respectively. More in particular the traffic weights $W_a$, $W_b$, $W_c$ may correspond with the WLAN 140, PLC 141 and LAN 142 and be noted as $W_{WLAN}$, $W_{PLC}$ and $W_{LAN}$ respectively. The parameters 211, 212 and 213 may for example correspond to an estimated latency in the respective AN which can be estimated via a round-trip delay time (RTD) or via alternative ways known in the art.

In an exemplary embodiment a look-up table can be used, which comprises the MAC-addresses corresponding to different ANs, and may further comprise corresponding internal network condition and/or internal network parameter, such as the estimated latency $L_{WLAN}$, $L_{PLC}$, $L_{LAN}$ per AN. An exemplary look-up table is shown below.

| MAC address | Access Network | Internal Network Parameter |
|---|---|---|
| 00:1b:63:84:45:e6 | WLAN | $L_{WLAN}$ |
| 05:0a:43:23:11:23 | LAN | $L_{LAN}$ |
| 12:4a:12:1a:14:bb | PLC | $L_{PLC}$ |

As described earlier, from each AN within the multi-AN an internal network parameter is obtained by the resource allocation device 200. From the above look-up table, it can be seen that from a Wifi access point corresponding to WLAN, from a router corresponding to LAN and from a PLC router corresponding to PLC internal network parameters $L_{WLAN}$, $L_{PLC}$, $L_{LAN}$ are obtained, respectively.

When the traffic 245 has been classified into traffic 245a, 245b and 245c, corresponding traffic weights $W_a$, $W_b$ and $W_c$ are calculated based on the received internal network parameters of each AN and weighted fair queuing (WFQ), or any similar queuing algorithm, can be applied. The weights $W_a$, $W_b$ and $W_c$ can be the inverse of an average latency of packet delivery in the respective AN. For example, when $L_{WLAN}$, $L_{LAN}$ and $L_{PLC}$ are estimated real time-latency (round-trip delay time (RTD)) in access networks of WLAN, LAN and PLC, respectively, which are obtained by the resource allocation device 200, then the traffic weight calculation unit 220 can calculate the corresponding weights as:

$$W_{WLAN} = \frac{1}{L_{WLAN}}$$

$$W_{LAN} = \frac{1}{L_{LAN}}$$

$$W_{PLC} = \frac{1}{L_{PLC}}$$

When the available resources of the shared transport medium 250, i.e. the output capacity of a network, are represented by $R$ (e.g. for ADSL 20 Mbps), then the resources of the shared transport medium are allocated based on:

$$R_{WLAN} = \frac{W_{WLAN}}{w_{LAN} + w_{WLAN} + w_{PLC}} R$$

$$R_{LAN} = \frac{W_{LAN}}{w_{LAN} + w_{WLAN} + w_{PLC}} R$$

$$R_{PLC} = \frac{W_{PLC}}{w_{LAN} + w_{WLAN} + w_{PLC}} R$$

From these formulas, $R_{WLAN}$ can be interpreted as which fraction of the resources of the shared transport medium 250 or output capacity thereof is devoted to WLAN, $R_{LAN}$ can be interpreted as which fraction of the resources of the shared transport medium 250 or output capacity thereof is devoted to LAN, and $R_{PLC}$ can be interpreted as which fraction of the resources of the shared transport medium 250 or output capacity thereof is devoted to LAN.

In general, when a traffic weight is represented as $W_i$, and $R_j$ determines the share of the $j^{th}$ AN of outbound traffic, the following formula applies:

$$R_j = \frac{W_j}{\sum_i W_i} R$$

By dynamically adjusting the traffic weights, i.e. the WFQ weights, WFQ can be utilized for enhancing the QoE of different users in the HAN. Moreover, weights can be dynamically adapted according to changes of internal network conditions, such as momentary traffic, capacity, etc.

Figure 3 illustrates schematically a further embodiment of a resource allocation device 300 according to the invention. In addition to the elements of resource allocation device 200 as described in view of figure 2, the resource allocation device 300 of figure 3 further comprises a second traffic classification 290 unit configured to classify received traffic 350a from each access network of the multiple access networks according to a traffic class C1, C2, C3, C4 after the traffic weight calculating unit 320 has calculated a traffic weight (not shown in figure 3) for each access network of the multiple access networks. The resource allocation unit, which in the embodiment of figure 3 is divided into two sub-units 330a, and 330b is further configured to allocate resources of the shared transport medium 350b to each access network of the multiple access network, based on the calculated traffic weight of the respective access network, by means of sub-unit 330a and based on the traffic class of traffic originating from said respective access network, by means of sub-unit 330b.

In figure 3, the shared transport medium is illustrated as two separate mediums 350a and 350b, wherein medium 350a acts as a transport medium or connection between the first sub-unit 330a of the resource allocation device and the second traffic classification unit 290, and wherein medium 350b is a transport medium or connection between the second sub-unit 330b of the resource allocation unit and a service domain such as the internet (not shown). Shared transport medium 350b may for example correspond with the shared transport medium 150 as illustrated in figure 1, whereas shared transport medium 350a may for example correspond with a link or connection between the resource allocation unit 130 and the residential gateway 170 in figure 1.

In an alternative embodiment, the functionality of both sub-units 330a, 330b of the resource allocation unit may be comprised in a single unit.

It is clear for the skilled person that embodiments of the resource allocation device 100, 200 may be deployed in addition to a residential gateway known in the art, and that in such a case the resource allocation device may be provided either separate from the residential gateway or incorporated in the residential gateway.

In alternative embodiments of the resource allocation device 300, the resource allocation device 300 may be deployed as alternative to a residential gateway, such as illustrated in figure 3.

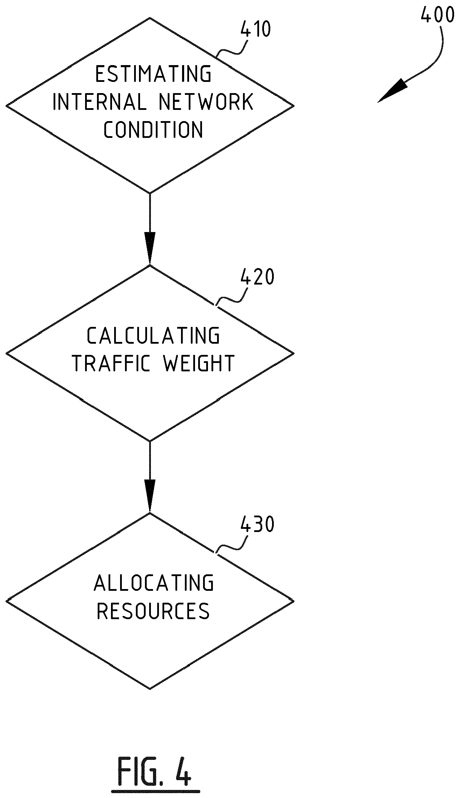

Figure 4 is a flowchart illustrating an exemplary embodiment of a resource allocation method 400 for allocating resources of a shared transport medium to multiple access networks within a multi-access network according to the invention. The resource allocation method 400 comprises step 410 of estimating for each access network of the multiple access networks an internal network condition, wherein the internal network condition is representative for internal resources which are available within the respective access network. The method further comprises step 420 of calculating for each access network of the multiple access networks a traffic weight based on the respective estimated internal network condition. A higher traffic weight is representative for more internal resources being available within the corresponding AN, whereas a lower traffic weight is representative for less internal resources being available in the corresponding AN. The method 400 further comprises the step 430 of allocating resources of the shared transport medium to each access network of the multiple access networks, based on the calculated traffic weight of the respective access network. More resources are allocated to an access network with a higher traffic weight, whereas fewer resources are allocated to an access network with a lower traffic weight.

In accordance with earlier described device embodiments, the step 430 of allocating resources may correspond to allocating resources of a shared transport medium such as a broadband access link towards a service domain such as the internet or a cloud environment. But alternatively, the step 430 of allocation resources may correspond to allocating resources of a link or connection to a residential gateway, or allocating resources of an internal link or connection within a resource allocation device according to the invention.

The step 410 of estimating internal network conditions may comprise receiving from each access network of the multiple access networks an internal network parameter. The internal network parameter is representative for the internal network condition of the respective access network, and may for example correspond with a latency of the respective access network. Based on the received internal network condition, the internal network conditions of the various access networks within the multi-AN may be calculated or estimated.

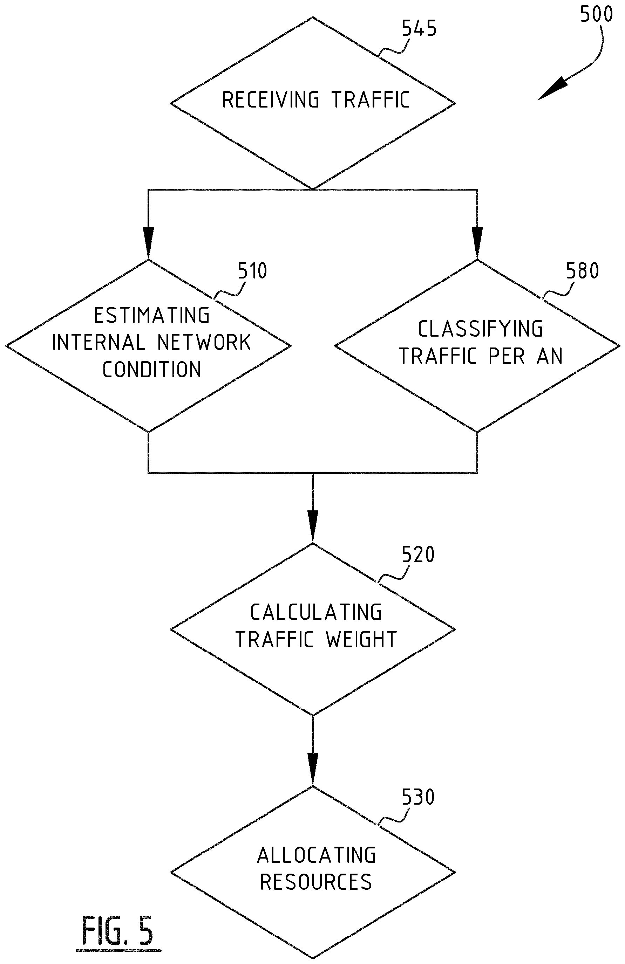

Figure 5 is a flowchart illustrating an alternative embodiment of a resource allocation method 500 according to the invention. In figure 5, steps 510, 520 and 530 correspond with the steps 410, 420 and 430 as illustrated in figure 4. In addition to these steps, the resource allocation method explicitly comprises step 545 of receiving traffic from each access network of the multiple access networks and step 580 of classifying the received traffic according to access network, based on an internal transport medium used by the respective access network.

Step 580 of classifying the received traffic according to access network may be based on a media access control, MAC, address from which the received traffic originates. In embodiments a look-up table may be used, which includes MAC addresses corresponding to the multiple access networks, along with internal network parameters associated with the multiple access networks.

Step 530 of allocating resources of the shared transport medium may comprise performing a weighted fair queuing algorithm on the calculated traffic weights of the respective access networks, wherein the calculated traffic weights are calculated in step 520.

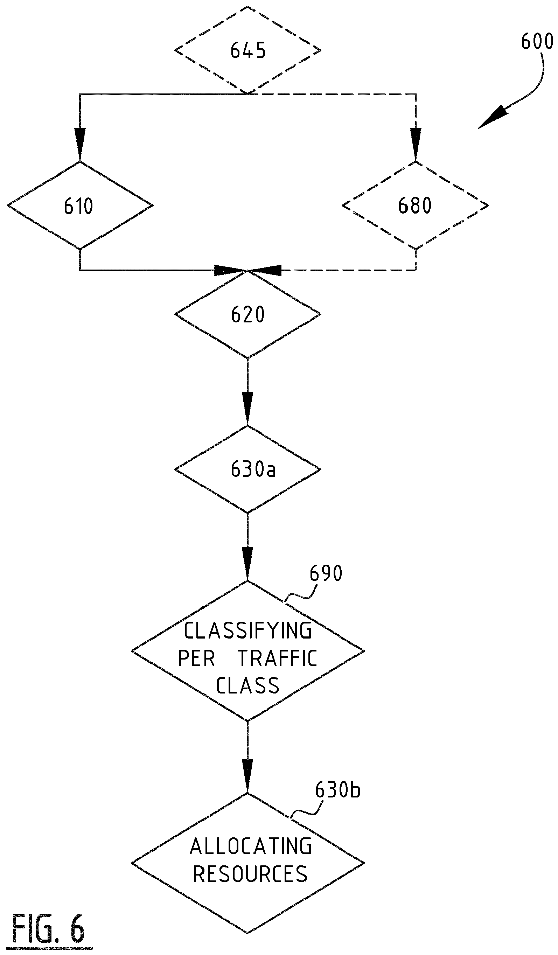

Figure 6 is a flowchart illustrating a further embodiment of a resource allocation method 600 according to the invention. In figure 6, the steps 645 and 680 correspond with the steps 545 and 580 of figure 5, respectively, and are illustrated in dotted lines to indicate that figure 6 illustrates two exemplary embodiments, one embodiment including the steps 645 and 680, and one embodiment excluding the steps 645 and 680. Further in figure 6, the steps 610, 620 and 630a correspond with the steps 410, 420, and 430 of figure 4, respectively, and with steps 510, 520 and 530 of figure 5, respectively. In addition to these steps, the method 600 further comprises the step 690 of classifying received traffic from each access network of the multiple access networks according to a traffic class, and step 630b of allocating resources of the shared transport medium to each access network of the multiple access networks, based on the traffic class of traffic originating from the respective access network.

As illustrated in the embodiment of figure 6, allocating resources of the shared transport medium may be based on the calculated traffic weight as a primary criterion as illustrated by step 630a, and subsequently based on the traffic class as a secondary criterion, as illustrated by step 630b. Although steps 630a and 630b are illustrated as separate steps in figure 6, it is clear to the skilled person that these steps may be executed during a general resource allocating step to one and the same shared transport medium. In the embodiment of figure 6, each one of steps 630a and 630b may be related to the allocation of resources from two distinct shared transport mediums.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the figures, including any functional blocks labelled as "units" "processors" or "modules", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "unit", "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Whilst the principles of the invention have been set out above in connection with specific embodiments, it is to be understood that this description is merely made by way of example and not as a limitation of the scope of protection which is determined by the appended claims.

**Claims**

1. Resource allocation device for allocating resources of a shared transport medium to multiple access networks within a multi-access network, said resource allocation device comprising:

- an estimating unit configured to estimate for each access network of the multiple access networks an internal network condition, said internal network condition being representative for internal resources which are available within the respective access network;
- a traffic weight calculating unit configured to calculate for each access network of the multiple access networks a traffic weight based on the respective estimated internal network condition, wherein a higher traffic weight is representative for more internal resources being available and a lower traffic weight is representative for less internal resources being available;
- a resource allocation unit configured to allocate resources of the shared transport medium to each access network of the multiple access networks, based on the calculated traffic weight of the respective access network, wherein more resources are allocated to an access network with a higher traffic weight and less resources are allocated to an access network with a lower traffic weight.

2. Resource allocation device according to claim 1, wherein the estimating unit is configured to

- receive from each access network of the multiple access networks an internal network parameter, said internal network parameter being representative for the internal network condition of the respective access network; and to
- estimate the internal network condition based on said received internal network parameter.

3. Resource allocation device according to claim 1 or claim 2, wherein the resource allocation device receives traffic from each access network of the multiple access networks and wherein the resource allocation device comprises a first traffic classification unit configured to classify the received traffic according to access network, based on an internal transport medium used by the respective access network.

4. Resource allocation device according to claim 3, wherein the first traffic classification unit is configured to classify the received traffic according to access network, based on a media access control, MAC, address from which the received traffic originates.

5. Resource allocation device according to any one of the preceding claims, wherein the resource allocation unit is configured to allocate resources of the shared transport medium by executing a weighted fair queuing algorithm on the calculated traffic weights of the respective access networks.

6. Resource allocation device according to any one of the preceding claims, comprising a second traffic classification unit configured to classify received traffic from each access network of the multiple access networks according to a traffic class after the traffic weight calculating unit has calculated a traffic weight for each access network of the multiple access networks; and wherein the resource allocation unit is configured to allocate resources of the shared transport medium to each access network of the multiple access networks, based on the calculated traffic weight of the respective access network and the traffic class of traffic originating from said respective access network.

7. Resource allocation device according to claim 6, wherein the resource allocation unit is configured allocate resources of the shared transport medium based on the calculated traffic weight as a primary criterion and based on the traffic class as a secondary criterion.

8. Resource allocation method for allocating resources of a shared transport medium to multiple access networks within a multi-access network, said resource allocation method comprising the steps of:

- estimating for each access network of the multiple access networks an internal network condition, said internal network condition being representative for internal resources which are available within the respective access network;
- calculating for each access network of the multiple access networks a traffic weight based on the respective estimated internal network condition, wherein a higher traffic weight is representative for more internal resources being available and a lower traffic weight is representative for less internal resources being available;
- allocating resources of the shared transport medium to each access network of the multiple access networks, based on the calculated traffic weight of the respective access network, wherein more resources are allocated to an access network with a higher traffic weight and less resources are allocated to an access network with a lower traffic weight.

9. Resource allocation method according to claim 8, wherein estimating the internal network condition comprises:

   - receiving from each access network of the multiple access networks an internal network parameter, said internal network parameter being representative for the internal network condition of the respective access network; and
   - estimating the internal network condition based on said received internal network parameter.

10. Resource allocation method according to claim 8 or claim 9, further comprising

    - receiving traffic from each access network of the multiple access networks; and
    - classifying the received traffic according to access network, based on an internal transport medium used by the respective access network.

11. Resource allocation method according to claim 10, wherein classifying the received traffic according to access network is based on a media access control, MAC, address from which the received traffic originates.

12. Resource allocation method according to any one of the preceding claims 8 to 11, wherein allocating resources of the shared transport medium comprises executing a weighted fair queuing algorithm on the calculated traffic weights of the respective access networks.

13. Resource allocation method according to any one of the preceding claims 8 to 12, further comprising:

    - classifying received traffic from each access network of the multiple access networks according to a traffic class after calculating the traffic weight for each access network of the multiple access networks; and
    - allocating resources of the shared transport medium to each access network of the multiple access networks, based on the calculated traffic weight of the respective access network and the traffic class of traffic originating from said respective access network.

14. Resource allocation method according to claim 13, comprising allocating resources of the shared transport medium based on the calculated traffic weight as a primary criterion and based on the traffic class as a secondary criterion.

15. A computer program product comprising computer-executable instructions for performing the method of any one of the claims 8-14, when the program is run on a computer.

**FIG. 1**

FIG. 2

FIG. 3

410

ESTIMATING
INTERNAL NETWORK
CONDITION

400

420

CALCULATING
TRAFFIC WEIGHT

430

ALLOCATING
RESOURCES

FIG. 4

500

545

RECEIVING TRAFFIC

510

ESTIMATING
INTERNAL NETWORK
CONDITION

580

CLASSIFYING
TRAFFIC PER AN

520

CALCULATING
TRAFFIC WEIGHT

530

ALLOCATING
RESOURCES

FIG. 5

645

600

610

680

620

630a

690

CLASSIFYING
PER TRAFFIC
CLASS

630b

ALLOCATING
RESOURCES

FIG. 6

Europäisches
Patentamt

European
Patent Office

Office européen
des brevets

## EUROPEAN SEARCH REPORT

Application Number

EP 17 15 6959

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2009/180430 A1 (FADELL ANTHONY M [US]) 16 July 2009 (2009-07-16) * paragraph [0080] - paragraph [0106] * ----- | 1-15 | INV. H04L12/867 |
| A | US 2004/170186 A1 (SHAO HUAI-RONG [US] ET AL) 2 September 2004 (2004-09-02) * paragraph [0020] - paragraph [0029] * ----- | 1-15 | ADD. H04L12/911 H04W28/02 H04W88/16 |

TECHNICAL FIELDS
SEARCHED (IPC)

H04W
H04L

The present search report has been drawn up for all claims

| Place of search | Date of completion of the search | Examiner |
|---|---|---|
| The Hague | 25 August 2017 | Martos Riaño, Demian |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

...........................................................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 17 15 6959

This annex lists the patent family members relating to the patent documents cited in the above-mentioned European search report.
The members are as contained in the European Patent Office EDP file on
The European Patent Office is in no way liable for these particulars which are merely given for the purpose of information.

25-08-2017

| Patent document cited in search report | | Publication date | Patent family member(s) | | Publication date |
|---|---|---|---|---|---|
| US 2009180430 | A1 | 16-07-2009 | CN | 101946472 A | 12-01-2011 |
| | | | CN | 104796355 A | 22-07-2015 |
| | | | EP | 2232794 A2 | 29-09-2010 |
| | | | EP | 2945332 A1 | 18-11-2015 |
| | | | KR | 20100113558 A | 21-10-2010 |
| | | | US | 2009180430 A1 | 16-07-2009 |
| | | | WO | 2009089051 A2 | 16-07-2009 |
| US 2004170186 | A1 | 02-09-2004 | EP | 1597876 A2 | 23-11-2005 |
| | | | JP | 4397928 B2 | 13-01-2010 |
| | | | JP | 2006519551 A | 24-08-2006 |
| | | | US | 2004170186 A1 | 02-09-2004 |
| | | | WO | 2004077720 A2 | 10-09-2004 |

EPO FORM P0459

For more details about this annex : see Official Journal of the European Patent Office, No. 12/82